# EUROPEAN PATENT SPECIFICATION

(11) **EP 2 727 153 B1**
(45) Date of publication and mention of the grant of the patent: **25.04.2018**
(21) Application number: 11869068.4
(22) Date of filing: 01.07.2011
(51) Int. Cl.: F03D 9/00, H02S 10/12, H02S 10/40, H02S 30/20

(54) **PORTABLE SOLAR AND WIND-POWERED ENERGY GENERATING SYSTEM**
TRAGBARES SOLAR- UND WINDBETRIEBENES ENERGIEERZEUGUNGSSYSTEM
SYSTÈME DE GÉNÉRATION D'ÉNERGIE À ÉNERGIE ÉOLIENNE ET SOLAIRE PORTABLE

(43) Date of publication of application: 07.05.2014
(73) Proprietor: Miller, Lynn, A., Crossville, TN 38571 (US)
(72) Inventor: Miller, Lynn, A., Crossville, TN 38571 (US)
(74) Representative: Tomkinson, Alexandra
(86) International application number: PCT/US2011/042875
(87) International publication number: WO 2013/006164

(56) References cited:
- EP-A1- 2 107 617
- EP-A2- 1 626 140
- WO-A1-2010/018294
- WO-A2-2009/017686
- WO-A2-2010/089535
- WO-A2-2010/129087
- CA-A1- 2 610 507
- DE-A1- 4 431 154
- DE-A1- 19 615 943
- DE-A1-102009 039 884
- DE-U1-202006 016 227
- FR-A1- 2 908 927
- JP-A- 2009 250 224
- JP-A- 2011 007 165
- KR-A- 20110 017 527
- KR-A- 20110 049 020
- US-A- 4 261 329
- US-A1- 2004 124 711
- US-A1- 2007 090 653
- US-A1- 2009 320 898
- US-A1- 2010 089 433
- US-A1- 2011 049 992
- US-A1- 2011 113 705
- US-B1- 7 793 467

## Description

### TECHNICAL FIELD

The present invention relates to electrical generation, and particularly to a portable solar powered energy generating system that provides an ecologically friendly, portable system for generating electricity for to be delivered to an electrical load, such as a storage battery, a power outlet, a charger for electrical vehicles or the like, or a combination thereof, or, alternatively, the electrical energy may be transmitted into the pre-existing electrical power grid.

### BACKGROUND ART

Concerns over rising pollution, global warming and the cost of fuel have led to a greater interest in the use of electric power for powering vehicles, either using electric power alone, or electric power in a hybrid vehicle, which also includes a tandem internal combustion engine. The initial limitation on an electric vehicle was the charging capacity of the batteries, so as to allow the vehicle to operate at comparable speeds with internal combustion engines and over comparable time periods.

Technological advances in storage cell design have made electric vehicles a viable alternative to internal combustion engines; however, the ability to recharge the storage cell or batteries remains a major drawback to acceptance by the general populace. For example, improved storage cells may give an electric vehicle a range of 100 miles at comparable speeds with internal combustion engines. This limits the user to a 50-mile radius from his or her home, since he or she must make a return trip in order to recharge the storage cells. Recharging typically involves a power cable connected between the vehicle and a charging station or electrical outlet located within the user's garage or dwelling.

If charging stations were available in public or private locations, such as parking garages, rest stops, or private parking lots associated with a particular business, the electric vehicle could be recharged while in the parking space or parking lot while the driver is at work or shopping. The availability of such charging stations would encourage the purchase of electric vehicles, since potential buyers and users would know that they were not limited to a drive or commute that was set by the charge of the battery or storage cell.

The ability and option to recharge a hybrid vehicle would provide the driver with a choice in fuel selection. The cost of a unit of electricity (measured in kilowatt-hours) is usually significantly more cost effective when compared with a similar unit of a fossil fuel, hydrogen, or alcohol-based fuel. Electricity, however, is typically provided through the conventional electrical grid, and power plants generate electricity through the burning of fossil fuels or through the usage of potentially hazardous nuclear power systems.

As time goes on, the demand for electrical power continues to increase unabated. As a result of the rapid increase in oil and natural gas prices since the late 1990' s, the growing awareness that emissions from fossil-fuel sources is the likely cause of global warming, and the need for energy independence for national security reasons, there has been an increased demand for cost-effective electric power generated from renewable resources, such as wind and solar.

In response to this demand, along with innovations in wind turbine design and efficiency, large utility-scale wind turbine electric generator farms (commonly referred to as "big wind") have been constructed in remote areas of the country with high wind potential. This increasingly competitive source of energy is steadily providing a growing share of U.S. electricity without consuming any natural resource or emitting any pollution or greenhouse gases. Wind energy generation is growing rapidly throughout the U.S. Wind energy has been growing 29% annually from 2002 to 2007 and the installed wind energy generating capacity is now over 20,000 MW (estimated by the end of 2008). Wind power currently supplies 1% of the nation's electricity, but is estimated to be capable of providing as much as 20% by 2020. Similar rapid increases in solar power generation and new solar collection systems are of considerable interest.

Unfortunately, large-scale solar collectors and generators, along with wind farms, presently have numerous disadvantages for providing power to the general public, as opposed to single-family homes, for example. Solar modules, consisting of at least one solar panel, and wind turbines are very expensive and must also be located in areas of high sun exposure and wind potential. Land for a large solar and/or wind energy generation system has to be purchased or leased. In addition, the energy developer has to purchase transmission line easements from the generator to the existing transmission power grid. As a result, the development time is long and costs are very high. Because of these restrictions, many new solar and big wind farms cannot be built for six to ten years.

In addition, such plants and energy generation stations are typically located remotely from the large urban areas experiencing the most rapid growth in the demand for electricity. For solar generation, a clear view of the sky is needed, without buildings blocking solar exposure, and for wind generation a similar clear path for wind currents must be provided. The transmission of such generated electric power over long distances has taxed the existing transmission grid to its limits, thereby adding to the nation's already most pressing energy and electric power problems, including blackouts and brownouts, energy security concerns, power quality issues, tighter emissions standards, transmission bottlenecks, and the desire for greater control over energy costs.

These transmission grid problems have constrained the development of solar and wind farms until either developers or governmental entities build new transmission capacity over long distances. This will require both huge capital investment and very long development cycles because of the need to purchase additional "rights-of-way" or easements for the new transmission lines. Such delays and capital investment substantially increase the per KWH costs of energy to the consumer, thereby making solar and wind generated electric power more expensive.

Smaller scale wind generation is also known and is typically also based on turbine driven power. However, typical wind driven turbines are relatively inefficient, often only converting a small fraction of the wind's kinetic energy into usable electrical power, and also only being effective when the wind is blowing in one particular direction within a small range of desirable speeds. Similarly, small-scale solar generation is well known, but typically is limited to only a small-scale and fixed location, such a single-family home or the like. Presently, neither solar nor wind power are readily available for usage on a public scale, such as that required to provide public charging stations for electrical vehicles.

Thus, a portable solar powered energy generating system solving the aforementioned problems is desired.

US2004/0124711 discloses a mobile power system comprising a transportable housing with a plurality of solar panels attachable to the housing to provide a first means of power generation, and a wind turbine attachable to a vertical post, the post being attached to the housing, to provide a second means of power generation.

WO2010/089535 discloses a modular assembly shelter for providing a rigid shelter comprising a solar powered electricity supply circuit. The shelter can be constructed from modular elements and the solar panels can be fitted to a roof of the modular shelter.

US2011/0049992 discloses embodiments using solar and wind technologies that can be applied to fixed buildings or portable buildings. The solar panels can be releasably attached to a roof of the portable building and other solar panels can be connected to the roof solar panel and extend outwardly from the roof. A support post can support one end of the extending solar panels.

US2009/0320898 discloses a configurable articulated photovoltic assembly wherein the photovoltic modules are hingedly connected to each other to allow the same to be folded for transportation.

US7793467 discloses a remote and portable, passively cooled and heated building. The building is transportable using a transporting vehicle and a solar panel is located on the roof of the building.

### DISCLOSURE OF INVENTION

According to the present invention there is provided a portable solar powered energy generating system according to claim 1.

The portable solar powered energy generating system provides an ecologically friendly, portable system for generating electricity. The system may be used as a portable charging station for electrically driven vehicles, for example. The portable solar powered energy generating system includes a portable enclosure having a roof, such as a trailer, a small portable house, a shed or the like. The portable enclosure is adapted for removable positioning on a support surface, such as the ground, a concrete pad, an asphalt or blacktop surface, a parking lot or the like.

First and second solar modules are provided. Each solar module includes at least one solar panel. The portable vertical support includes a base adapted for supporting the portable vertical support on the support surface and an upper end. A wind turbine is preferably mounted on the upper end.

A third solar module is further provided, and a collapsible support is mounted on the portable vertical support for releasably supporting the third solar module. The wind turbine mounted on the upper end of the portable vertical support is in electrical communication with the first, second and third solar modules, and electricity generated thereby is delivered to an electrical load, such as a storage battery, a power outlet, a charger for electrical vehicles or the like, or a combination thereof. Alternatively, the electrical energy may be transmitted into the pre-existing electrical power grid. Further, the power outlet, storage battery or other electrical load may be associated with a portable office, work site, portable educational facility or other venue.

These and other features of the present invention will become readily apparent upon further review of the following specification and drawings.

### BRIEF DESCRIPTION OF DRAWINGS

Fig. 1 is a side view of a portable solar powered energy generating system according to the present invention.
Fig. 2 is a top view of a portable solar powered energy generating system according to the present invention.
Fig. 3 is a side view of the portable solar powered energy generating system of Fig. 1, shown being utilized as a charging station for an electric vehicle.
Fig. 4 is a partial side view of the portable solar powered energy generating system of

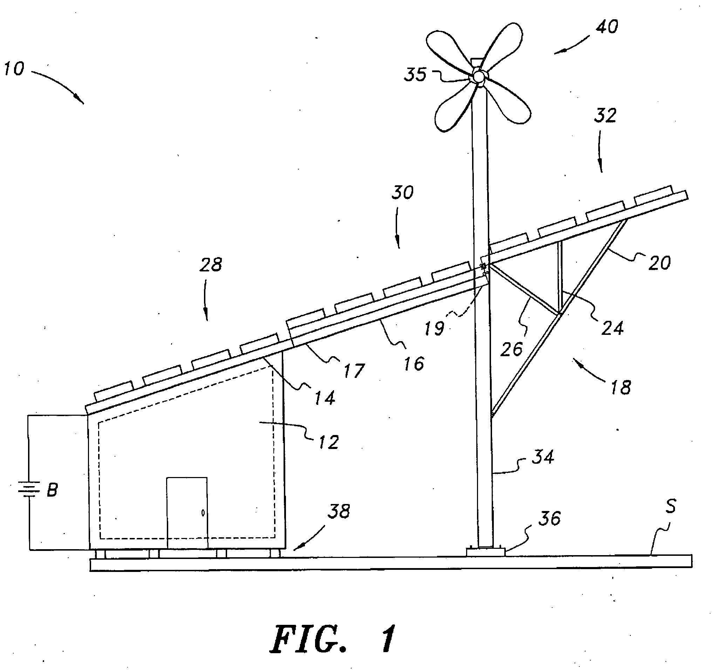

Fig. 1, shown in a partially collapsed state for transportation.

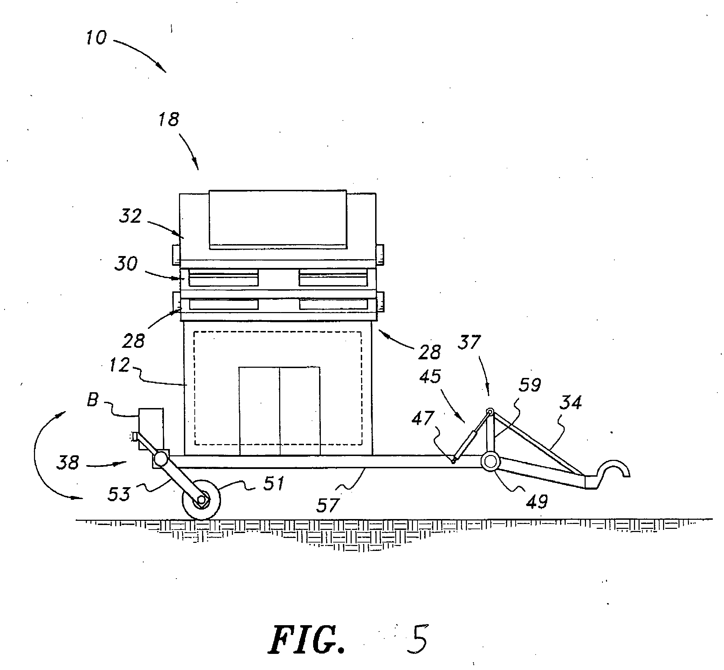

Fig. 5 is a partial side view of the portable solar powered energy generating system of
Fig. 1, shown being transported.

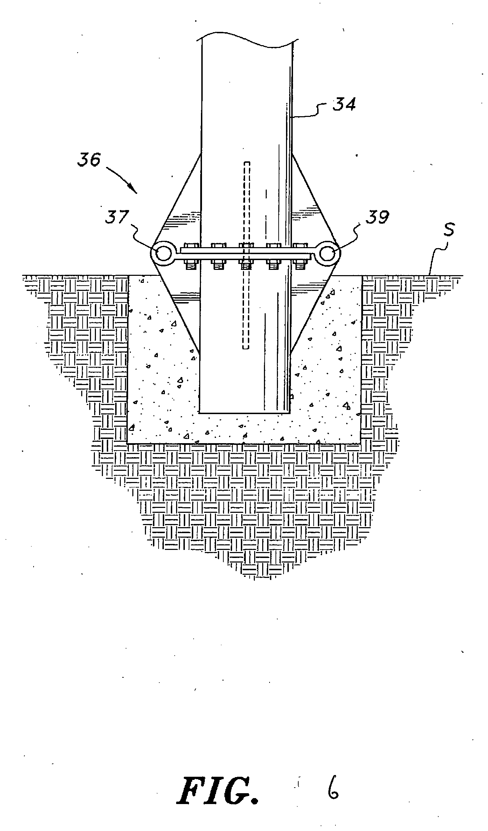

Fig. 6 is a partial view of a mounting structure for a pole of the portable solar powered energy generating system of Fig. 1.

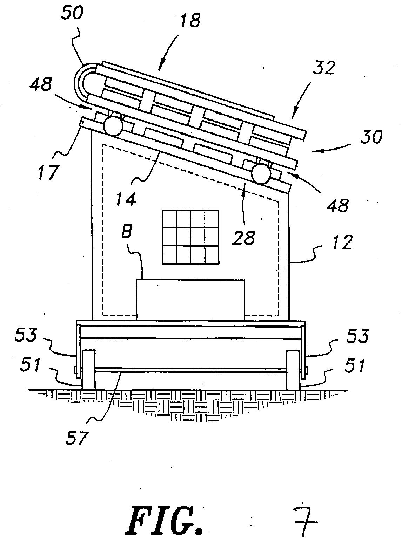

Fig. 7 is a rear view of the portable solar powered energy generating system of Fig. 1, shown being transported.

Similar reference characters denote corresponding features consistently throughout the attached drawings.

### BEST MODES FOR CARRYING OUT THE INVENTION

Fig. 1 illustrates a first embodiment of the portable solar powered energy generating system 10. The system 10 is an ecologically friendly, portable station for generating electricity. The portable solar powered energy generating system 10 may be used as a portable charging station for electrically driven vehicles, for example. It should be understood that the electrical power may be used for any desired purpose, such delivery to an electrical load, such as a storage battery, a power outlet, a charger for electrical vehicles or the like, or a combination thereof. Alternatively, the electrical energy may be transmitted into the pre-existing electrical power grid. Further, the power outlet, storage battery or other electrical load may be associated with a portable office, work site, portable educational facility or other venue.

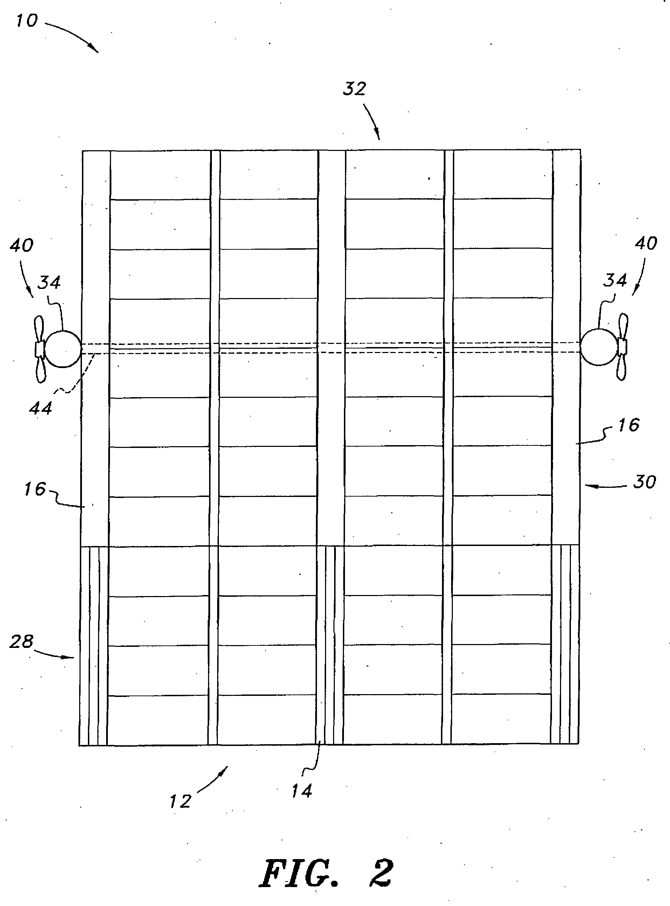

As best shown in Figs. 1 and 2, the portable solar powered energy generating system 10 includes a portable enclosure 12 having a roof 14, such as a trailer, a small portable house, a shed or the like. The portable enclosure 12 is adapted for removable positioning on a support surface S, such as the ground, a concrete pad, an asphalt or blacktop surface, a parking lot or the like. Preferably, skids 38 or similar supports are mounted to the floor of the enclosure 12, as shown, easily removable support of the enclosure 12 on surface S.

First and second solar modules 28, 30 are provided, with each solar module 28, 30 including at least one photovoltaic solar panel. Preferably each solar module is comprised of an array of photovoltaic cells arranged in solar panels. Solar panels are well known in the art, and any suitable type of solar panel utilized for electrical energy generation may be utilized. Details of an exemplary portable photovoltaic array of solar panels arranged in an electronic circuit that generates electrical power that could be utilized in a charging station are included in U.S. Patent 7,492,120, issued on February 17, 2009, which is incorporated by reference in its entirety herein.

The first solar module 28 is mounted on the roof 14 of the portable enclosure 12. The portable enclosure 12 is constructed using structural insulated panels (SIPs), each of which is comprised of a core of rigid foam plastic insulation sandwiched between two structural skins of oriented strand board. First solar module 28 is permanently fixed to the roof 14, and may be secured thereto by any suitable type of fixture or attachment, such as adhesives, bolts or the like.

A portable vertical support 34 is removably positioned adjacent the portable enclosure 12. The portable vertical support 34 includes a base 36, adapted for supporting the portable vertical support 34 on the support surface S, and an upper end 35. A wind turbine 40 is preferably mounted on the upper end 35. Wind turbines are well known in the art, and any suitable type of wind turbine utilized for electrical energy generation may be utilized. Wind turbine 40 is preferably removably mounted on the upper end 35, allowing for easy transport of system 10. Any suitable type of releasable mount may be used for removably mounted wind turbine 40 on upper end 35.

An extensible support 16 is further provided, with the extensible support 16 releasably supporting the second solar module 30. The extensible support 16 has opposed first and second ends 17, 19, respectively, with the first end 17 being releasably attached to the roof 14 of the portable enclosure 12, and the second end 19 being releasably attached to the portable vertical support 34.

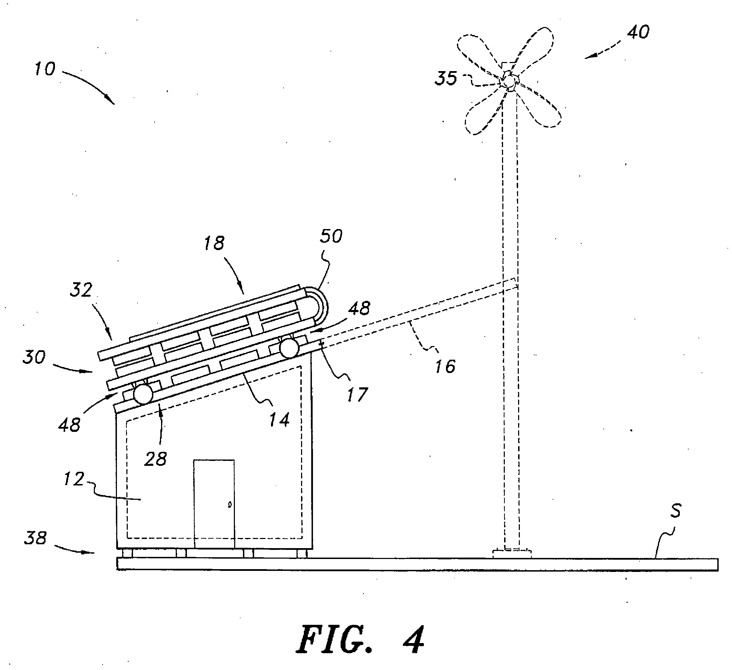

In the side view of Fig. 1, only a single pole or vertical support 34 is shown. As shown in the top view of Fig. 2, vertical support 34 preferably includes a pair of poles, preferably spaced apart to the width of roof 14 of enclosure 12. A crossbar 44 preferably extends therebetween for supporting second end 19 of extensible support 16. Second end 19 may be secured to vertical support 34 through the usage of any suitable type of releasable attachment, such as hooks, removable bolts, sliding pins or the like. Similarly, as shown in Fig. 4, the first end 17 of extensible support 16 may be secured to the edge of roof 14 through the usage of any suitable type of releasable attachment, such as hooks, removable bolts, sliding pins or the like. As further shown in Fig. 2, a pair of wind turbines 40 may be provided, with each being mounted on a respective one of the poles of portable vertical support 34.

As shown in Figs. 1-4, a third solar module 32 is further provided, with a collapsible support 18 being mounted on the portable vertical support 34 for releasably supporting the third solar module 32. The collapsible support 18 preferably includes a main shaft 20, pivotally secured to the vertical support 34, with secondary pivotal shafts 24, 26 pivotally secured thereto for supporting the third solar module 32. Alternatively, as shown in the collapsed state of Fig. 4, the collapsible support 18 may be permanently, pivotally secured to the lower surface of third solar module 32.

In the transportable, collapsed configuration of Fig. 4, first solar module 28 is permanently mounted to roof 14. Clamps 48, or any other suitable type of releasable fasteners, releasably secure the lower surface of second solar module 30 to the first solar module 28. As shown, abutting ends of second solar module 30 and third solar module 32 are joined to one another by a hinge 50, which may be any suitable type of hinge or pivot. First, second and third solar modules 28, 30, 32 are electrically connected in the fully deployed configuration of Fig. 1.

The enclosure 12, folded second and third solar modules 30, 32 (with attached collapsible support 18), portable vertical support 34, and extensible support 16 (along with any other associated elements, such as a separate storage battery B) may be easily loaded onto a truck, into a trailer or the like, and transported to any desired location. Upon deployment, enclosure 12 is unloaded from the truck, trailer or the like, support on support surface S by skids 28, and portable vertical support 34 is positioned on support surface S, away from enclosure 12, such that extensible support 16 may be releasably mounted therebetween. Wind turbine 40 is mounted on the upper end of vertical support 34, and second solar module 30 is mounted on extensible support 16. Third solar module 32 is unfolded from second solar module 30, with collapsible support 18 extending downwardly therefrom to contact vertical support 34 (the lower end thereof may be secured to vertical support 34 by any suitable type of releasable fixture, such as removable bolts, sliding pins or the like) an provide positioning and support for third solar module 32.

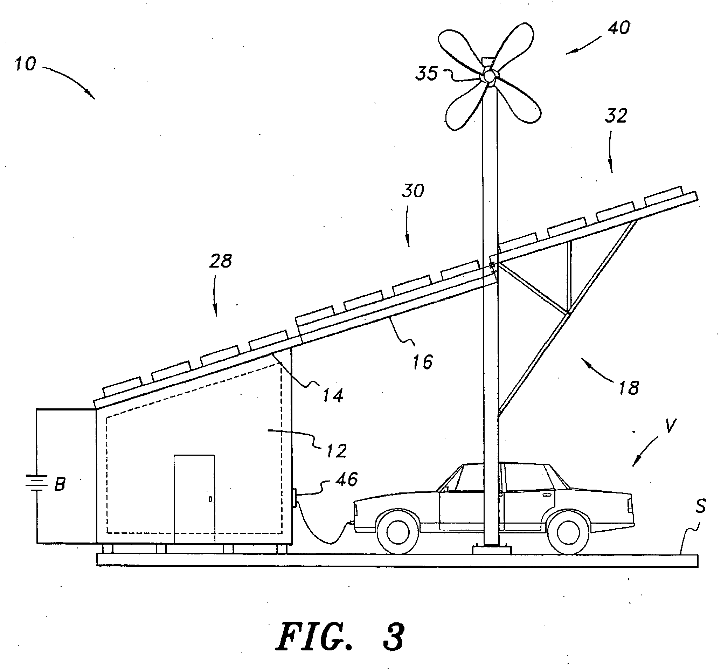

The wind turbine 40 mounted on the upper end 35 of the portable vertical support 34 is in electrical communication with the first, second and third solar modules 28, 30, 32, and electricity generated thereby is delivered to an electrical load, such as a storage battery or battery bank B, a power outlet, a charger for electrical vehicles or the like, or a combination thereof. Fig. 3 illustrates an exemplary electrical vehicle V charging via an outlet 46, which is in electrical communication with storage battery B. It should be understood that wind turbine 40 and first, second and third solar modules 28, 30, 32 may be used to supplement the electrical grid, may be used to replace the power provided by the electrical grid, may be used with or without storage battery or battery bank B, or may be used to power any desired electrical load.

Additionally, it should be understood that system 10 may be used in combination with any desired additional structural elements. For example, the second and third solar modules 30, 32 provide an awning-like cover, which may be used in combination with, for example, a tarp to create a secondary garage-like enclosure for vehicle V of Fig. 3. Such a tent may be alternatively utilized for any desired purpose that requires the usage of electricity, such as an entertainment show or the like. Further, upon deployment, the supports may and solar modules may be manually positioned and deployed, or may include additional drive elements, such as hydraulic cylinders or the like, allowing for automated deployment thereof.

Fig.6 illustrates a mounting structure, with the lower end of vertical support 34 being first sunk into the support surface, which may be a poured concrete base or the like, and with base 36 being seated on the surface thereof, post-hardening. Base 36 includes pivot hinge 37 on one side thereof, as shown, with a corresponding locking pin 39 or the like secured to the other end thereof. As shown, any suitable types of bolts or other removable attachments may further be applied.

Figs. 5 and 7 illustrate the system 10 of Fig. 1 in the collapsed state and loaded onto a mobile support 57 or the like for transport. Support 57 is the main support for the building, allowing the entire unit to be easily moved. Support 57 has a configuration similar to that of a conventional trailer, but by providing mobile support 57, the structure does not have to be separately lifted onto (and removed from) an external trailer. Preferably, a hydraulic cylinder 45 is pivotally secured to the support 57 for three-way pivotal interconnection between a support rod 59 (which is also pivotally secured to the support 57 at 49) and the vertical support 34. It should be understood that any suitable type of raising or lowering device may be used for raising the building support. The support 57 includes wheel 51 at one end thereof. The opposite end has a conventional trailer hitch or the like mounted thereto, as shown. Wheel 51 is mounted on a rotating support 53, which may be rotated upwardly, away from the ground, when transportation is completed, thus allowing trailer 57 to rest on the ground (with rotation being indicated by the directional arrow in Fig. 5). As shown, torsion axle or support 53 may also be used to secure battery pack B to the side of housing 12. Rotating supports 53 are best shown in the rear view of Fig. 10. It should be understood that the building 12 may be positioned 90 degrees or 180 degrees from the orientation shown, with respect to support 57.

It should be understood that enclosure 12, roof 14, solar modules 28, 30, 32, vertical support 34 and collapsible support 18 may have any desired configuration, size or dimensions, depending upon the desired usage thereof. Moreover the solar modules 28, 30, 32 may have any type of azimuth or elevation adjustment feature for unison or individual control of said modules. Extensible support 16 may be any suitable type of support, such as detachable rails or the like, and any suitable type of collapsible support 18 may be utilized. Similarly, any suitable type of electrical connection between wind turbine 40, solar modules 28, 30, 32, battery B and outlet 46 may be utilized.

## Claims

1. A portable solar and wind-powered energy generating system (10), comprising:
a portable enclosure (12) having a roof (14);
first, second and third solar modules (28, 30, 32), each of the solar modules (28, 30) having at least one photovoltaic solar panel;
wherein the first solar module is permanently mounted to the roof (14) of the portable enclosure (12); and wherein abutting ends of the second solar module (30) and third solar module (32) are hingedly or pivotably joined to allow upper surfaces of the second and third modules (30, 32) to be folded to face each other; means for selectively transmitting electricity generated by the first, second, and third solar modules (28, 30, 32) to an electrical load;
a portable vertical support (34);
an extensible support (16) is provided for releasably supporting the second solar module (30) thereon, the extensible support (16) having opposed first and second ends (17, 19);
means for releasably attaching the first end (17) of the extensible support (16) to the roof (14) of the portable enclosure (12); and
means for releasably attaching the second end (19) of the extensible support (16) to the portable vertical support (34);
a collapsible support (18) for releasably supporting the third solar module (32); and releasable fasteners (48) for securing a lower surface of the second solar module (30) to the first solar module (28);
wherein the first, second and third solar modules are movable between a collapsed configuration, wherein a lower surface of the second solar module (30) is releasably secured to the first solar module (28) by said releasable fasteners (48), and wherein the second solar module (30) and third solar module (32) are folded such that said upper surfaces of the second and third solar modules (30, 32) face each other;
and a deployed configuration, wherein the portable vertical support (34) is located adjacent to the portable enclosure (12), wherein said first end (17) of the extensible support (16) is releasably attached to the roof (14) of the portable enclosure (12);
wherein said second end (10) of the extensible support (16) is releasably attached to the portable vertical support (34), such that the extensible support (16) is mounted between the roof (14) and the portable vertical support (34); wherein the second solar module (30) is supported by the extensible support (16);
wherein the collapsible support (18) is mounted on said portable vertical support (34); and
wherein the third solar module (32) is unfolded from the second solar module (30), with the collapsible support (18) extending downwardly therefrom and being in contact with the portable vertical support (34) to provide positioning and support for the third solar module (32).

2. The portable solar and wind-powered energy generating system according to claim 1, further comprising a wind turbine (40) mounted on said portable vertical support (34), the wind turbine (40) being in electrical communication with said means for selectively transmitting the electricity generated by said first, second and third solar modules (28, 30, 32) to the electrical load.

3. The portable solar and wind-powered energy generating system according to claim 1, wherein said collapsible support (18) for said third solar module (32) further comprises;
a main shaft (20) pivotally secured to said portable vertical support (34); and secondary pivotal shafts (24, 26) pivotally secured to the main shaft (20).

4. The portable solar and wind-powered energy generating system according to claim 1, further comprising skid supports (38) mounted underneath a floor portion of said portable enclosure (12), the skid supports (38) facilitating transport and placement of said portable enclosure (12).

5. The portable solar and wind-powered energy generating system according to claim 4, further comprising a towable mobile support (57) removably attachable to said support skids (38) for transporting said portable enclosure (12).

6. The portable solar and wind-powered energy generating system according to claim 5, wherein said towable mobile support (57) further comprises means for lowering said portable enclosure (12) to the ground after transport of said portable enclosure (12) to a desired location.

7. The portable solar and wind-powered energy generating system according to claim 1, further comprising any of a plurality of storage batteries (B) disposed inside said portable enclosure (12), the storage batteries (B) being electrically connected to said solar modules (28, 30, 32) for charging of the batteries, a power outlet (46) electrically connected to said means for selectively transmitting electricity, the power outlet (46) providing sufficient power to charge electrical vehicles (V), or means for selectively electrically connecting the portable solar powered energy generating system (10) to a power grid electrically connected to said means for selectively transmitting electricity, thereby providing additional power to the power grid.

8. The portable solar and wind-powered energy generating system according to claim 1, wherein said portable vertical support (34) further comprises a crossbar (44) attached to two poles, each of the poles supporting a wind turbine (40), the crossbar (44) further supporting the extensible support (16) for said second solar module (30).

## Patentansprüche

1. Ortsveränderliches solar- und windbetriebenes Energieerzeugungssystem (10), das Folgendes aufweist:
ein ortsveränderliches Gehäuse (12) mit einem Dach (14);
ein erstes, zweites und drittes Solarmodul (28, 30, 32), wobei die Solarmodule (28, 30) jeweils wenigstens eine photovoltaische Solarplatte haben;
wobei das erste Solarmodul permanent auf dem Dach (14) des ortsveränderlichen Gehäuses (12) montiert ist und wobei aneinander angrenzende Enden des zweiten Solarmoduls (30) und des dritten Solarmoduls (32) gelenkig oder schwenkbar verbunden sind, damit obere Oberflächen des zweiten und des dritten Moduls (30, 32) so geklappt werden können, dass sie einander zugekehrt sind;
ein Mittel zum selektiven Übertragen von Elektrizität, die von dem ersten, zweiten und dritten Solarmodul (28, 30, 32) erzeugt wird, an eine elektrische Last;
einen ortsveränderlichen senkrechten Träger (34);
ein ausziehbarer Träger (16) ist zum auslösbaren Tragen des zweiten Solarmoduls (30) daran bereitgestellt, wobei der ausziehbare Träger (16) ein erstes und ein zweites Ende (17, 19) hat, die einander entgegengesetzt sind;
ein Mittel zum auslösbaren Anbringen des ersten Endes (17) des ausziehbaren Trägers (16) am Dach (14) des ortsveränderlichen Gehäuses (12) und
ein Mittel zum auslösbaren Anbringen des zweiten Endes (19) des ausziehbaren Trägers (16) am ortsveränderlichen senkrechten Träger (34);
einen zusammenklappbaren Träger (18) zum auslösbaren Tragen des dritten Solarmoduls (32) und
auslösbare Befestigungselemente (48) zum Befestigen einer unteren Oberfläche des zweiten Solarmoduls (30) am ersten Solarmodul (28);
wobei das erste, zweite und dritte Solarmodul bewegbar sind zwischen einer zusammengeklappten Anordnung, in der eine untere Oberfläche des zweiten Solarmoduls (30) durch die genannten auslösbaren Befestigungselemente (48) auslösbar an dem ersten Solarmodul (28) befestigt ist und in der das zweite Solarmodul (30) und das dritte Solarmodul (32) so zusammengelegt sind, dass die genannten oberen Oberflächen des zweiten und des dritten Solarmoduls (30, 32) einander zugekehrt sind;
und einer aufgeklappten Anordnung, in der der ortsveränderliche senkrechte Träger (34) sich neben dem ortsveränderlichen Gehäuse (12) befindet, wobei das genannte erste Ende (17) des ausziehbaren Trägers (16) auslösbar am Dach (14) des ortsveränderlichen Gehäuses (12) angebracht ist;
wobei das genannte zweite Ende (10) des ausziehbaren Trägers (16) auslösbar an dem ortsveränderlichen senkrechten Träger (34) angebracht ist, so dass der ausziehbare Träger (16) zwischen dem Dach (14) und dem ortsveränderlichen senkrechten Träger (34) montiert ist; wobei das zweite Solarmodul (30) von dem ausziehbaren Träger (16) getragen wird;
wobei der zusammenklappbare Träger (18) an dem genannten ortsveränderlichen senkrechten Träger (34) montiert ist und
wobei das dritte Solarmodul (32) vom zweiten Solarmodul (30) vorgeklappt wird, der zusammenklappbare Träger (18) sich dabei davon nach unten erstreckt und mit dem ortsveränderlichen senkrechten Träger (34) in Kontakt ist, um für die Positionierung und Abstützung des dritten Solarmoduls (32) zu sorgen.

2. Ortsveränderliches solar- und windbetriebenes Energieerzeugungssystem nach Anspruch 1, das ferner eine Windturbine (40) aufweist, die an dem genannten ortsveränderlichen senkrechten Träger (34) montiert ist, wobei die Windturbine (40) mit dem genannten Mittel zum selektiven Übertragen der von dem genannten ersten, zweiten und dritten Solarmodul (28, 30, 32) erzeugten Elektrizität an die elektrische Last in elektrischer Kommunikation steht.

3. Ortsveränderliches solar- und windbetriebenes Energieerzeugungssystem nach Anspruch 1, wobei der genannte zusammenklappbare Träger (18) für das genannte dritte Solarmodul (32) ferner Folgendes aufweist:
einen Hauptstab (20), der schwenkbar an dem genannten ortsveränderlichen senkrechten Träger (34) befestigt ist; und
sekundäre Schwenkstäbe (24, 26), die schwenkbar am Hauptstab (20) befestigt sind.

4. Ortsveränderliches solar- und windbetriebenes Energieerzeugungssystem nach Anspruch 1, das ferner unter einem Bodenteil des genannten ortsveränderlichen Gehäuses (12) montierte Trägerkufen (38) aufweist, wobei die Trägerkufen (38) Transport und Aufstellung des genannten ortsveränderlichen Gehäuses (12) erleichtern.

5. Ortsveränderliches solar- und windbetriebenes Energieerzeugungssystem nach Anspruch 4, das ferner einen fahrbaren mobilen Träger (57) aufweist, der zum Transportieren des genannten ortsveränderlichen Gehäuses (12) abnehmbar an den genannten Trägerkufen (38) angebracht werden kann.

6. Ortsveränderliches solar- und windbetriebenes Energieerzeugungssystem nach Anspruch 5, wobei der genannte fahrbare mobile Träger (57) ferner ein Mittel zum Absenken des genannten ortsveränderlichen Gehäuses (12) auf den Boden nach dem Transport des genannten ortsveränderlichen Gehäuses (12) an einen gewünschten Ort aufweist.

7. Ortsveränderliches solar- und windbetriebenes Energieerzeugungssystem nach Anspruch 1, das ferner jedwede von mehreren Speicherbatterien (B), die im Inneren des genannten ortsveränderlichen Gehäuses (12) angeordnet sind, wobei die Speicherbatterien (B) zum Aufladen der Batterien elektrisch mit den genannten Solarmodulen (28, 30, 32) verbunden sind, einen Stromanschluss (46), der elektrisch mit dem genannten Mittel zum selektiven Übertragen von Elektrizität verbunden ist, wobei der Stromanschluss (46) ausreichend Strom zum Aufladen elektrischer Fahrzeuge (V) bereitstellt, oder ein Mittel zum selektiven elektrischen Verbinden des ortsveränderlichen solarbetriebenen Energieerzeugungssystems (10) mit einem Stromnetz, das elektrisch mit dem genannten Mittel zum selektiven Übertragen von Elektrizität verbunden ist, wodurch das Stromnetz mit zusätzlichem Strom versorgt wird.

8. Ortsveränderliches solar- und windbetriebenes Energieerzeugungssystem nach Anspruch 1, wobei der genannte ortsveränderliche senkrechte Träger (34) ferner eine an zwei Pfosten angebrachten Querstange (44) aufweist, wobei die Pfosten jeweils eine Windturbine (40) tragen, wobei die Querstange (44) ferner den ausziehbaren Träger (16) für das genannte zweite Solarmodul (30) stützt.

## Revendications

1. Système de génération d'énergie portable à énergie éolienne et solaire (10), comprenant :
une enceinte portable (12) possédant un toit (14) ;
des premier, deuxième et troisième modules solaires (28, 30, 32), chacun des modules solaires (28, 30) possédant au moins un panneau solaire photovoltaïque ;
cas dans lequel le premier module solaire est monté de manière permanente sur le toit (14) de l'enceinte portable (12) ; et cas dans lequel des extrémités en butée du deuxième module solaire (30) et du troisième module solaire (32) sont jointes par articulation à charnières ou par pivotement pour permettre à des surfaces supérieures des deuxième et troisième modules (30, 32) d'être repliées pour se faire face l'une l'autre ;
des moyens pour transmettre sélectivement l'électricité générée par les premier, deuxième et troisième modules solaires (28, 30, 32) vers une charge électrique ;
un support vertical portable (34) ;
un support extensible (16) étant prévu pour soutenir de manière détachable le deuxième module solaire (30) sur celui-ci, le support extensible (16) possédant des première et deuxième extrémités opposées (17, 19) ;
des moyens pour attacher de manière détachable la première extrémité (17) du support extensible (16) au toit (14) de l'enceinte portable (12) ; et
des moyens pour attacher de manière détachable la deuxième extrémité (19) du support extensible (16) au support vertical portable (34) ;
un support rétractable (18) pour soutenir de manière détachable le troisième module solaire (32) ; et
des fixations détachables (48) pour assujettir une surface inférieure du deuxième module solaire (30) au premier module solaire (28) ;
cas dans lequel les premier, deuxième et troisième modules solaires sont mobiles entre une configuration rétractée, où une surface inférieure du deuxième module solaire (30) est assujettie de manière détachable au premier module solaire (28) par lesdites fixations détachables (48), et où le deuxième module solaire (30) et le troisième module solaire (32) sont repliés de telle sorte que lesdites surfaces supérieures des deuxième et troisième modules solaires (30, 32) se font face l'une l'autre ;
et une configuration déployée, où le support vertical portable (34) est localisé en position adjacente à l'enceinte portable (12), où ladite première extrémité (17) du support extensible (16) est attachée de manière détachable au toit (14) de l'enceinte portable (12) ;
cas dans lequel ladite deuxième extrémité (10) du support extensible (16) est attachée de manière détachable au support vertical portable (34), de telle sorte que le support extensible (16) est monté entre le toit (14) et le support vertical portable (34) ; cas dans lequel le deuxième module solaire (30) est soutenu par le support extensible (16) ;
cas dans lequel le support rétractable (18) est monté sur ledit support vertical portable (34) ; et
cas dans lequel le troisième module solaire (32) est déplié à partir du deuxième module solaire (30), alors que le support rétractable (18) s'étend vers le bas à partir de celui-ci et est en contact avec le support vertical portable (34) afin de procurer le positionnement et le soutien pour le troisième module solaire (32).

2. Système de génération d'énergie portable à énergie éolienne et solaire selon la revendication 1, comprenant en outre une éolienne (40) montée sur ledit support vertical portable (34), l'éolienne (40) étant en communication électrique avec lesdits moyens pour transmettre sélectivement l'électricité générée par lesdits premier, deuxième et troisième modules solaires (28, 30, 32) vers la charge électrique.

3. Système de génération d'énergie portable à énergie éolienne et solaire selon la revendication 1, ledit support rétractable (18) pour ledit troisième module solaire (32) comprenant en outre :
un arbre principal (20) assujetti de manière pivotable audit support vertical portable (34) ; et
des arbres secondaires à pivotement (24, 26) assujettis de manière pivotable à l'arbre principal (20).

4. Système de génération d'énergie portable à énergie éolienne et solaire selon la revendication 1, comprenant en outre des supports à patins (38) montés en dessous d'une portion plancher de ladite enceinte portable (12), les supports à patins (38) facilitant le transport et le placement de ladite enceinte portable (12).

5. Système de génération d'énergie portable à énergie éolienne et solaire selon la revendication 4, comprenant en outre un support mobile remorquable (57) attachable de manière amovible auxdits patins de support (38) pour transporter ladite enceinte portable (12).

6. Système de génération d'énergie portable à énergie éolienne et solaire selon la revendication 5, ledit support mobile remorquable (57) comprenant en outre des moyens pour abaisser ladite enceinte portable (12) jusqu'au sol après le transport de ladite enceinte portable (12) vers une localisation désirée.

7. Système de génération d'énergie portable à énergie éolienne et solaire selon la revendication 1, comprenant en outre n'importe quelle batterie parmi une pluralité de batteries de stockage (B) disposées à l'intérieur de ladite enceinte portable (12), les batteries de stockage (B) étant connectées électriquement auxdits modules solaires (28, 30, 32) pour assurer la charge des batteries, une sortie d'énergie (46) connectée électriquement auxdits moyens pour transmettre sélectivement l'électricité, la sortie d'énergie (46) procurant suffisamment d'énergie pour charger des véhicules électriques (V), ou des moyens pour connecter électriquement de manière sélective le système de génération d'énergie portable à énergie solaire (10) à un réseau d'énergie connecté électriquement auxdits moyens afin de transmettre sélectivement de l'électricité, fournissant par conséquent de l'énergie additionnelle au réseau d'énergie.

8. Système de génération d'énergie portable à énergie éolienne et solaire selon la revendication 1, ledit support vertical portable (34) comprenant en outre une barre transversale (44) attachée aux deux poteaux, chacun des poteaux soutenant une éolienne (40), la barre transversale (44) soutenant en outre le support extensible (16) pour ledit deuxième module solaire (30).
